(19) Europäisches Patentamt / European Patent Office / Office européen des brevets

(11) **EP 2 486 244 B1**

(12) **FASCICULE DE BREVET EUROPEEN**

(45) Date de publication et mention
de la délivrance du brevet:
**26.07.2017 Bulletin 2017/30**

(21) Numéro de dépôt: **10770854.7**

(22) Date de dépôt: **23.09.2010**

(51) Int Cl.:
*F01D 17/16* (2006.01)    *F02C 9/20* (2006.01)
*F02C 9/22* (2006.01)

(86) Numéro de dépôt international:
**PCT/FR2010/052000**

(87) Numéro de publication internationale:
**WO 2011/042636 (14.04.2011 Gazette 2011/15)**

(54) **SYSTEME DE COMMANDE DE LA POSITION ANGULAIRE D'AUBES DE STATOR ET PROCEDE D'OPTIMISATION DE LADITE POSITION ANGULAIRE**

SYSTEM ZUR STEUERUNG DER WINKELPOSITION VON LEITSCHAUFELN UND VERFAHREN ZUR OPTIMIERUNG DIESER WINKELPOSITION

SYSTEM FOR CONTROLLING THE ANGULAR POSITION OF STATOR BLADES AND METHOD FOR OPTIMISING SAID ANGULAR POSITION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **06.10.2009 FR 0956958**

(43) Date de publication de la demande:
**15.08.2012 Bulletin 2012/33**

(73) Titulaire: **Safran Aircraft Engines**
**75015 Paris (FR)**

(72) Inventeurs:
• **BOYER, David, Julien**
  **F-94700 Maisons Alfort (FR)**
• **DJELASSI, Cédrik**
  **F-91630 Marolles En Hurepoix (FR)**
• **RICORDEAU, Julien, Alexis, Louis**
  **F-75012 Paris (FR)**

(74) Mandataire: **Gevers & Orès**
  **9 rue St Antoine du T**
  **31000 Toulouse (FR)**

(56) Documents cités:
**EP-A1- 1 286 031    EP-A2- 1 036 924**
**GB-A- 2 009 858**

**Description**

L'invention concerne le domaine des moteurs à turbine à gaz comprenant au moins deux corps et comportant un ou plusieurs étages de stator dont les aubes sont à calage angulaire variable.

L'invention vise à optimiser la position angulaire desdites aubes de stator de manière à réduire la consommation du carburant lorsque le turbomoteur fonctionne en régime stabilisé. On entend par « régime stabilisé », un régime du moteur dans lequel la poussée fournie par le moteur est sensiblement constante au cours du temps.

A titre d'exemple, chaque corps d'un turbomoteur à turbine à gaz à double corps comprend au moins un compresseur et une turbine montée en aval dudit compresseur. Par convention, dans la présente demande, les termes « amont » et « aval » sont définis par rapport au sens de circulation de l'air dans le turbomoteur. De manière classique, un compresseur comprend plusieurs étages de rotor pour accélérer et comprimer un flux d'air circulant d'amont en aval dans le moteur. Afin de redresser le flux d'air après accélération, un étage de stator est agencé directement à la sortie de chaque étage de rotor.

Un étage de stator se présente sous la forme d'une roue fixe, s'étendant axialement, avec des aubes de stator radiales montées à la périphérie de la roue de stator. Afin d'optimiser le redressement du flux d'air par les étages de stator en aval des étages de rotor, on peut modifier l'orientation angulaire des aubes de stator, les aubes étant dites à calage variable. A cet effet, le turbomoteur comprend un système de commande de la position angulaire des aubes de stator du compresseur.

De manière classique, en référence à la figure schématique 1A, la position angulaire des aubes de stator d'un turbomoteur à double corps M est déterminée principalement en fonction de la vitesse de rotation du rotor haute pression N2 et de la température en entrée du compresseur $T_{25}$. Le système de commande comprend à cet effet des moyens 20 de calcul d'une valeur de consigne $VSV_{CAL}$ de la position angulaire des aubes sur chaque roue de stator pour une vitesse de rotation donnée du rotor N2. La valeur de consigne calculée $VSV_{CAL}$ est transmise à un actionneur d'asservissement 6 agencé pour modifier la position angulaire courante des aubes de stator du turbomoteur M. Un système de commande de la position angulaire d'aubes de stator à calage variable d'un compresseur est connu du document GB 2009858. Les moyens de calcul 20 sont paramétrés par des lois mathématiques qui ont été préalablement déterminées pour convenir à un moteur « moyen » qui n'est ni trop récent (moteur neuf sorti d'usine), ni trop « usé » (destiné à la révision).

En pratique, le moteur réel ne correspond pas au moteur « moyen » pour lequel les lois mathématiques ont été calculées. Les lois mathématiques des systèmes actuels tiennent compte des contraintes de marges du moteur (marges de robustesse au vieillissement, marges de dispersion de moteur à moteur, marges d'encrassement, etc.). Il en résulte que la position angulaire des aubes n'est pas optimisée pour le moteur réel mais robuste pour un moteur neuf comme dégradé.

Une solution serait de modifier les lois mathématiques afin que les paramètres d'usure du moteur ainsi que les dispersions entre moteurs soient pris en compte. Cependant, cette solution est difficile à mettre en oeuvre, les paramètres étant nombreux et difficiles à modéliser.

Afin de remédier à ces inconvénients, la demanderesse propose un système de commande de la position angulaire d'aubes de stator à calage variable d'un compresseur de turbomoteur comprenant au moins deux corps, chacun avec une vitesse de rotation (N1 et N2 respectivement), pour un turbomoteur fonctionnant en régime stabilisé, le système comprenant :

- des moyens de calcul d'une position angulaire de consigne des aubes en fonction d'une des vitesses (N1, N2) et
- un module de correction de la position de consigne comprenant :

  ◦ des moyens de détermination de la position angulaire des aubes ;
  ◦ des moyens de mesure du débit de carburant du turbomoteur ;
  ◦ une mémoire dans laquelle les positions angulaires successives des aubes sont associées aux débits de carburant du turbomoteur mesurés auxdites positions angulaires ; et
  ◦ des moyens de détermination d'un angle correcteur agencés pour calculer l'angle correcteur en fonction de la différence entre les débits de carburant mesurés entre deux positions angulaires successives des aubes.

Le système selon l'invention permet avantageusement de déterminer une position angulaire des aubes optimisant la consommation de carburant par le turbomoteur. La demanderesse a déterminé que le débit de carburant du turbomoteur, en régime stabilisé donné, est fonction de la position angulaire des aubes et que cette fonction présente localement un minimum. Autrement dit, en faisant varier localement la position angulaire des aubes, on peut déterminer dans quelle mesure on doit modifier la position angulaire courante des aubes pour limiter le débit de carburant. Le module de correction de l'invention permet de compléter un système conventionnel de commande de la position angulaire des aubes afin d'améliorer les performances du moteur à un régime stabilisé donné.

Contrairement à l'art antérieur, dans lequel la loi de détermination de la position angulaire des aubes est statique pour tous les moteurs sans tenir compte de la dispersion des paramètres du moteur ou de son usure, le système selon l'invention permet un réglage de la position angulaire des aubes en fonction de l'état du moteur. Au lieu de procéder au recensement de tous les paramètres d'usure ou de dispersion du moteur et d'obtenir des lois mathématiques multiples et complexes, la demanderesse mesure directement l'impact d'une variation d'angle sur la consommation de carburant.

Grâce à l'invention, on corrige la position de consigne théorique calculée à partir d'un modèle mathématique correspondant à un moteur « moyen ». Un tel système peut être intégré de manière simple à un turbomoteur existant. Cette nouvelle formulation du problème à résoudre permet de déterminer une valeur optimale de position angulaire des aubes.

De préférence, le système comprend un additionneur agencé pour calculer une position de consigne optimisée en ajoutant à la position angulaire de consigne l'angle correcteur. On vient ainsi corriger la valeur de consigne pour tenir compte de la consommation de carburant.

De préférence encore, le système comprend un actionneur agencé pour asservir la position angulaire des aubes en fonction de la position de consigne optimisée. La position angulaire courante est ainsi modifiée par l'actionneur pour « suivre » la position de consigne optimisée.

De préférence toujours, le module de correction comprend des moyens de contrôle de l'état du turbomoteur et des moyens d'inhibition de la correction de la position angulaire courante des aubes, les moyens d'inhibition étant activés si l'état du turbomoteur n'est pas adapté à une correction de la position angulaire des aubes.

Les moyens d'inhibition sont activés si l'état du turbomoteur n'est pas adapté à une correction de la position angulaire des aubes. Les moyens d'inhibition permettent, sur consigne des moyens de contrôle, d'empêcher une modification de la position angulaire des aubes qui pourrait mettre en péril le turbomoteur ou qui ne serait pas adaptée à son état de fonctionnement.

De manière préférée, le module de correction comprend des moyens de limitation de la valeur de l'angle correcteur agencés pour borner la valeur de l'angle correcteur afin de rester dans une plage de fonctionnement sans risque.

L'invention concerne également un turbomoteur comprenant un système de commande tel que décrit précédemment.

L'invention concerne en outre un procédé d'optimisation de la position angulaire courante d'aubes de stator d'un compresseur de turbomoteur comprenant au moins deux corps chacun tournant à une vitesse (N1 ; N2), pour un turbomoteur fonctionnant en régime stabilisé, procédé dans lequel :

> a) on détermine le débit de carburant de référence du turbomoteur à une position angulaire de référence des aubes ;
> b) on détermine le débit de carburant courant du turbomoteur à la position angulaire courante des aubes ;
> c) on calcule un angle correcteur en fonction de la différence entre le débit de carburant de référence et le débit de carburant courant de manière à diminuer le débit de carburant;
> d) on ajoute à une position de consigne préalablement calculée ledit angle correcteur de manière à obtenir une position de consigne optimisée ;
> e) on modifie la position angulaire courante des aubes afin qu'elle corresponde à la position de consigne optimisée.

De préférence, on itère les étapes (a) à (e) en utilisant comme position angulaire de référence dans l'étape (a), la position angulaire courante de l'étape (b) de l'itération précédente.

Cela permet de manière avantageuse d'optimiser la position angulaire des aubes de « proche en proche » ce qui garantit une optimisation précise et dépourvue d'effets secondaires néfastes tels que l'apparition de transitoires.

De préférence encore, on calcule l'angle correcteur par une méthode d'optimisation, de préférence, par une méthode de descente de gradient de la fonction carburant F définissant le débit de carburant du turbomoteur par rapport à la position angulaire des aubes.

La fonction carburant F admet un minimum local ce qui garantit la convergence de la méthode d'optimisation. Elle peut parfois être convexe ce qui garantit l'existence d'une position angulaire optimale.

De préférence toujours, on borne la valeur de l'angle correcteur afin de rester dans une plage de fonctionnement sans risque (survitesse, pompage, élévation de température, ...).

Selon une autre forme de mise en oeuvre de l'invention, on contrôle l'état du moteur et on inhibe la modification de la position angulaire courante des aubes si l'état du turbomoteur n'est pas adapté à une correction de la position angulaire des aubes.

L'invention sera mieux comprise à l'aide du dessin annexé sur lequel :

- la figure 1A représente un système de commande de la position angulaire des aubes selon l'art antérieur;
- la figure 1B représente un système de commande de la position angulaire des aubes avec un module de correction de la position angulaire selon l'invention;

EP 2 486 244 B1

- la figure 2 représente un diagramme schématique d'une première forme de réalisation d'un système de commande angulaire des aubes de stator d'un turbomoteur agencé pour calculer un angle correcteur;
- la figure 3 représente un diagramme schématique d'une deuxième forme de réalisation d'un système de commande avec des moyens d'inhibition de la correction;
- la figure 4 représente un diagramme schématique d'une troisième forme de réalisation d'un système de commande avec des moyens de limitation de la valeur de l'angle correcteur et
- la figure 5 est une courbe représentant l'évolution du débit de carburant du moteur en fonction de la position angulaire des aubes de stator du moteur, pour un régime stabilisé déterminé du moteur.

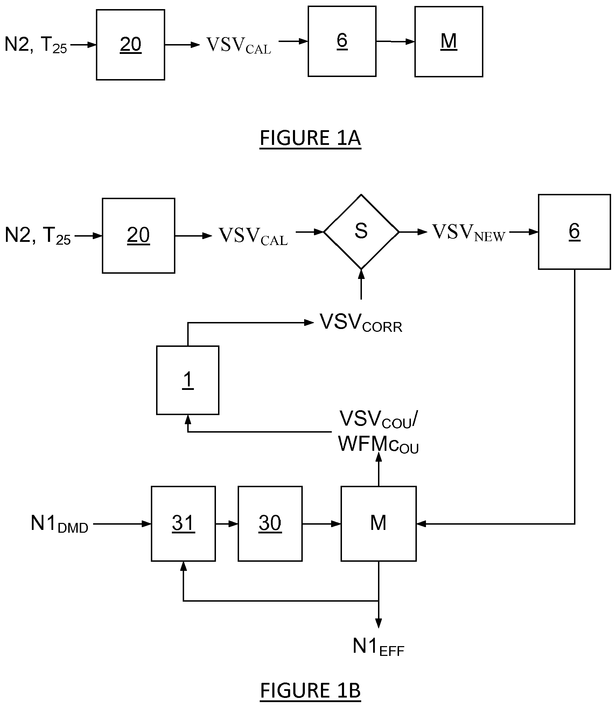

Un système de commande de la position angulaire des aubes de stator du compresseur HP d'un turbomoteur, selon l'invention, est représenté sur la figure 1B pour un moteur à double corps : un corps à basse pression BP avec une vitesse de rotation N1 et un corps à haute pression HP avec une vitesse de rotation N2. A l'aide d'une manette des gaz, on commande le moteur en lui indiquant la poussée souhaitée ; la poussée est directement liée à la vitesse du corps basse pression BP. Ainsi, une consigne de poussée impose une consigne de vitesse de rotation du corps BP $N1_{DMD}$. Dans un souci de clarté, on utilisera la référence N1, relative à la vitesse de rotation du corps BP, également pour la poussée du moteur du fait de la liaison directe entre ces deux paramètres. De même, la référence N1 peut correspondre à d'autres paramètres ayant un lien direct avec la poussée du moteur, en particulier, le paramètre EPR correspondant au terme anglais « Engine Pressure Ratio » bien connu de l'homme du métier.

De manière classique, le turbomoteur comprend des moyens 20 de calcul de la position angulaire de consigne des aubes de stator $VSV_{CAL}$ en fonction de la vitesse de rotation du corps haute pression N2 et de la température du corps haute pression (HP) $T_{25}$. Les moyens de calcul 20 sont paramétrés par des lois mathématiques, bien connues de l'homme du métier, permettant de calculer une position angulaire de consigne $VSV_{CAL}$ en fonction de la vitesse de rotation du corps HP N2.

Le système de commande selon l'invention comprend en outre un module 1 de correction de la position de consigne $VSV_{CAL}$ des aubes de stator du moteur M. Le module de correction 1 permet de déterminer un angle correcteur $VSV_{CORR}$ optimisant la consommation de carburant. Le système de commande comprend également un additionneur S agencé pour recevoir en entrée la valeur de consigne calculée $VSV_{CAL}$ et l'angle correcteur $VSV_{CORR}$ afin d'émettre en sortie une valeur de consigne optimisée $VSV_{NEW}$ correspondant à la somme de ses deux paramètres d'entrée ($VSV_{CORR}$, $VSV_{CAL}$). Le système de commande comprend de plus un actionneur d'asservissement 6 qui modifie la position angulaire courante des aubes $VSV_{COU}$ en fonction de la valeur de consigne optimisée $VSV_{NEW}$.

Toujours en référence à la figure 1B, le système de commande comprend un module 31 d'estimation du carburant nécessaire au maintien du régime de rotation N1, aussi appelé réseau correcteur, qui reçoit en entrée la consigne de régime $N1_{DMD}$ correspondant à un régime de rotation désiré, c'est-à-dire à un niveau de poussée désirée. Le système de commande comprend en outre un dispositif d'asservissement en carburant 30 commandé par le réseau correcteur 31 et apte à modifier le débit de carburant en fonction du régime de rotation effectif du moteur $N1_{EFF}$, mesuré par exemple, par un capteur tachymétrique.

Si le débit de carburant fourni au moteur M ne permet pas d'atteindre la poussée demandée ($N1_{EFF}$ est inférieur à $N1_{DMD}$), le réseau correcteur 31 détermine la commande à appliquer au dispositif d'asservissement en carburant 30 pour augmenter le débit de carburant fourni au moteur M et ainsi compenser l'écart entre les régimes souhaité $N1_{DMD}$ et effectif $N1_{EFF}$.

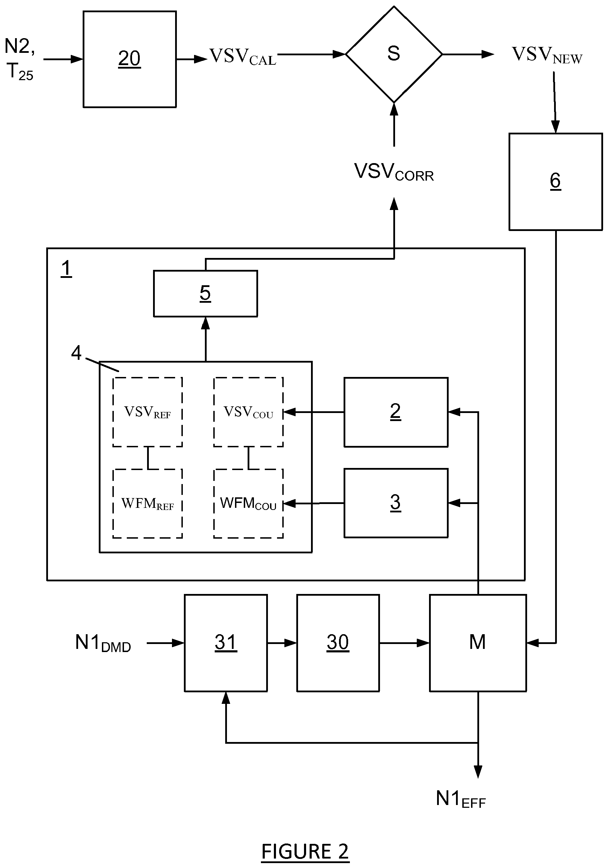

En référence à la figure 2, le module de correction 1, selon une première forme de réalisation de l'invention, comprend des moyens 2 de détermination de la position angulaire des aubes VSV, connus en soi, se présentant par exemple sous la forme de capteurs de position, ainsi que des moyens 3 de détermination du débit de carburant du turbomoteur WFM à une position angulaire donnée des aubes VSV. Ces moyens de détermination du débit 3 peuvent être soit directs - ils se présentent par exemple sous la forme d'un capteur monté en amont des injecteurs de la chambre de combustion du turbomoteur - soit indirects - on mesure par exemple la position linéaire d'un élément venant obturer la section de passage d'une canalisation de carburant du turbomoteur, les dimensions de la section étant connues. En règle générale, ces moyens de détermination 2, 3 sont activés de manière continue pour surveiller en permanence la position angulaire des aubes ainsi que la consommation de carburant.

Le module de correction 1 comprend également une mémoire 4 dans laquelle les positions angulaires successives des aubes VSV sont associées aux débits de carburant du turbomoteur WFM mesurés auxdites positions angulaires VSV. Au cours du temps, la mémoire 4 du module de correction 1 est complétée par lesdits moyens de détermination 2, 3. En pratique, la mémoire 4 ne conserve qu'un certain nombre de couple de valeurs (VSV, WFM), les couples les plus anciens étant remplacés par des couples plus récents. A titre d'exemple, la mémoire 4 comprend au moins deux couples : un couple de valeurs courantes ($VSV_{COU}$, $WFM_{COU}$) et un couple de valeurs précédentes, dites valeurs de référence ($VSV_{REF}$, $WFM_{REF}$).

Dans le cas présent, on se limite au fonctionnement du moteur à un régime stabilisé, la poussée fournie par le moteur étant sensiblement constante au cours du temps. A titre d'exemple, en fonctionnement stabilisé, la vitesse

4

de rotation N1 est constante ou le paramètre EPR est constant. En régime stabilisé, on peut avantageusement suivre l'évolution du débit de carburant $WFM_{COU}$ en fonction de la valeur de l'angle des aubes de stator $VSV_{COU}$ en analysant la fonction discrète, désignée par la suite fonction carburant F, définie par les couples de la mémoire 4 du système de commande 1.

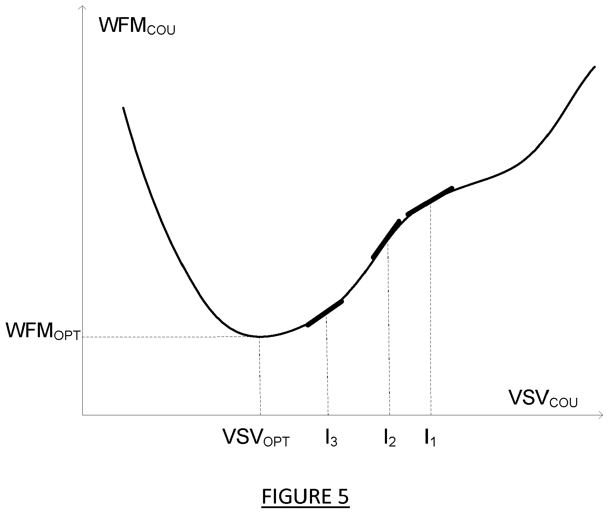

Pour un fonctionnement du turbomoteur à vitesse de rotation N1 constante, également désigné « iso N1 », la demanderesse a étudié la fonction carburant F, définissant le débit de carburant $WFM_{COU}$ par rapport à la position angulaire des aubes $VSV_{COU}$, et a déterminé que cette fonction carburant F est localement convexe et donc qu'il existe une position angulaire des aubes pour laquelle la consommation de carburant est la plus faible, cette position angulaire optimale étant référencée $VSV_{OPT}$. La figure 5 représente la fonction carburant F ainsi que la position angulaire optimale pour un régime stabilisé déterminé du moteur.

La position angulaire $VSV_{OPT}$ est appelée position optimale du moteur à double titre. Premièrement, elle est optimale vis-à-vis du régime stabilisé déterminé du moteur, la position angulaire optimale variant en fonction du régime donné. Deuxièmement, elle est optimale vis-à-vis du moteur en tant que tel, la position angulaire $VSV_{OPT}$ étant définie « sur mesure » pour le moteur en tenant naturellement compte de son état d'usure et de la dispersion de fabrication. Autrement dit, selon les marges de fabrication et les jeux liés au montage, un moteur donné n'a pas exactement le même comportement qu'un autre moteur de la même série, il en résulte que chaque moteur possède une position angulaire optimale $VSV_{OPT}$ qui lui est propre.

Le module de correction 1 comprend en outre des moyens 5 de détermination d'un angle correcteur $VSV_{CORR}$, agencés pour calculer l'angle correcteur $VSV_{CORR}$ en fonction de la différence entre les débits de carburant mesurés entre deux positions angulaires successives des aubes. Autrement dit, on ne calcule pas l'angle correcteur $VSV_{CORR}$ par analyse des paramètres intrinsèques du moteur mais par optimisation du résultat souhaité, de manière à obtenir une consommation en carburant la plus réduite possible $WFM_{OPT}$.

A cet effet, les moyens 5 de détermination de l'angle correcteur $VSV_{CORR}$ sont agencés pour déterminer un minimum local de la fonction carburant F à iso N1 et, ce, en ne connaissant que quelques valeurs de cette fonction (les dernières positions angulaires successives). Les moyens 5 de détermination de l'angle correcteur $VSV_{CORR}$ sont ici paramétrés par une fonction d'optimisation dont la fonction est de déterminer l'angle correcteur $VSV_{CORR}$ tout en limitant sa valeur. En effet, si la position angulaire courante des aubes $VSV_{COU}$ est modifiée d'un angle correcteur $VSV_{CORR}$ de valeur trop élevée, des transitoires apparaissent dans le moteur ce qui pourrait l'endommager.

Le principe de l'optimisation consiste à faire varier localement la position angulaire courante des aubes, à mesurer l'impact de cette variation angulaire sur le débit de carburant effectif pour en tirer un enseignement sur la manière de modifier la position angulaire courante.

La fonction d'optimisation selon l'invention permet ainsi d'améliorer le rendement du moteur de manière sûre en limitant l'apparition de transitoires. La fonction d'optimisation va être décrite pour une méthode de descente de gradient mais d'autres méthodes d'optimisation conviendraient également, telles qu'une optimisation par la méthode des moindres carrés, etc. La méthode de descente de gradient permet d'optimiser la position angulaire de manière simple.

Avec les couples de valeurs ($VSV_{COU}$, $WFM_{COU}$ ; $VSV_{REF}$, $WFM_{REF}$) stockés dans la mémoire 4, la méthode de descente de gradient calcule la valeur du gradient de la fonction de carburant F à la position angulaire courante des aubes $VSV_{COU}$ par rapport à sa position angulaire précédente $VSV_{REF}$. On en déduit ainsi le sens de convergence de la fonction carburant F. Par optimisation linéaire, on calcule un angle correcteur $VSV_{CORR}$ en fonction de la valeur du gradient à la position angulaire courante $VSV_{COU}$ et d'un incrément saturé SAT1 et d'un taux de convergence $\mu$, le taux de convergence $\mu$ étant choisi de manière à réaliser un compromis entre une convergence rapide vers la position angulaire optimale $VSV_{OPT}$ et une protection contre l'apparition de transitoires dans le turbomoteur.

Grâce à la fonction d'optimisation, on en déduit la valeur de l'angle correcteur $VSV_{CORR}$ qui doit être ajouté à la position de consigne $VSV_{CAL}$ pour obtenir la valeur de consigne optimisée $VSV_{NEW}$. L'actionneur d'asservissement 6 permet de modifier la position angulaire courante des aubes $VSV_{COU}$ afin de correspondre à la position de consigne optimisée $VSV_{NEW}$. La position de consigne optimisée $VSV_{NEW}$ ne correspond pas forcément à la position angulaire optimale $VSV_{OPT}$ car une modification importante de la position angulaire courante $VSV_{COU}$ pourrait entraîner un pompage du compresseur. De manière préférée, l'optimisation est réalisée de manière progressive, par itérations.

Grâce à l'optimisation de la position angulaire des aubes, le moteur est régulé à un régime donné avec un débit de carburant inférieur. En référence à la figure 1B, le dispositif d'asservissement en carburant 30 commande au réseau correcteur 31 de conserver le même régime N1 malgré la modification du comportement du corps HP, dû à la modification de la position angulaire courante des aubes. On réalise ainsi des économies de carburant.

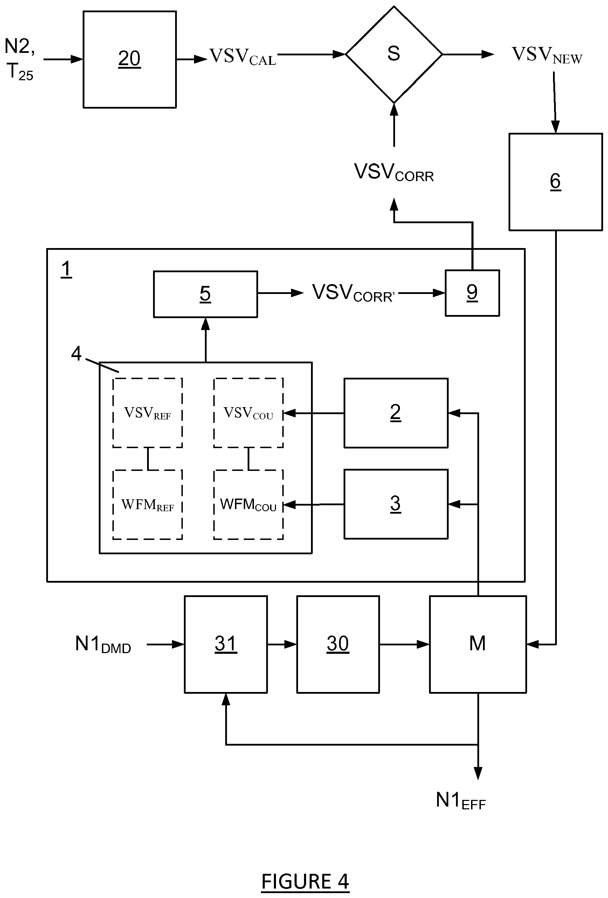

De préférence, en référence à la figure 4, le module de correction 1 comprend des moyens 9 de limitation de la valeur de l'angle correcteur $VSV_{CORR}$. Agencés pour borner l'angle correcteur par un seuil de saturation du gradient SAT2 de manière à éviter l'apparition d'oscillations lors d'une modification de la position angulaire courante des aubes $VSV_{COU}$. Cela permet en outre de contrôler la vitesse de convergence de la méthode d'optimisation. La fonction de saturation SAT2 et l'incrément saturé SAT1 peuvent être utilisées ensemble ou de manière indépendante.

A titre d'exemple, la méthode d'optimisation par descente de gradient peut obéir à la relation mathématique reproduite ci-dessous :

$$VSV_{CORR}(t) = -SAT1[Gradient \ F(VSV_{COU}) \ x \ \mu] + VSV_{CORR}(t-1)$$

$$VSV_{CORR}'(t) = signe(VSV_{CORR}(t)) * min( |VSV_{CORR}(t)|, SAT2)$$

$$VSV_{NEW}(t) = VSV_{CAL}(t) + VSV_{CORR}'(t)$$

Afin d'initier la procédure d'optimisation, il peut être nécessaire de modifier très légèrement la position angulaire courante des aubes pour mettre en oeuvre l'optimisation et commencer le processus. On dit alors que l'on initie la méthode d'optimisation par « excitation » du système. L'initialisation peut également résulter d'un modèle mathématique indiquant le sens de variation de la position angulaire des aubes VSV conduisant à une diminution du débit de carburant WFM.

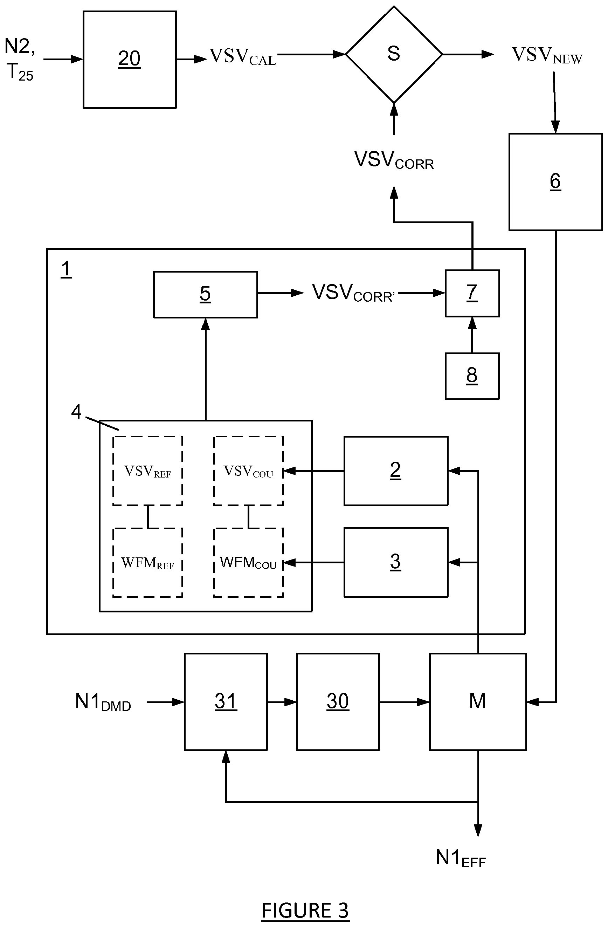

Selon une forme préférée de l'invention, en référence à la figure 3, le module de correction 1 comprend des moyens d'inhibition 7 agencés pour annuler la valeur de l'angle correcteur calculé $VSV_{CORR}$ par les moyens de détermination de l'angle correcteur 5. Cela permet d'empêcher une correction de la position angulaire des aubes par l'actionneur d'asservissement 6 lorsque le moteur ne fonctionne pas en régime stabilisé.

Il va de soi que les moyens de limitation 9 et les moyens d'inhibition 7 pourraient être mis en oeuvre dans un même système de commande 1.

Dans cette forme de réalisation, les moyens d'inhibition 7 se présentent sous la forme d'une porte logique « OU » reliée à des moyens 8 de mesure de l'état du moteur, c'est-à-dire « son état de santé ». A titre d'exemple, les moyens 8 de mesure de l'état du moteur comprennent :

- des moyens de mémorisation des événements du type pompage. Si un pompage a été détecté au cours de la vie du turbomoteur, la logique est inhibée par les moyens d'inhibition 7.
- des moyens de mesure de marge de la température des gaz de sortie, désigné « paramètre de marge EGT » correspondant au terme anglais « Exhaust Gas Temperature », par rapport à une marge prédéterminée. En cas de marge insuffisante, la logique est inhibée par les moyens d'inhibition 7.
- des moyens d'estimation de l'état du compresseur du turbomoteur par des capteurs de mesure des coefficients de débit et d'efficacité du compresseur haute pression. Ces coefficients, représentatifs de l'état du moteur, sont comparés à des valeurs seuil prédéterminées par rapport à un moteur « sain », c'est-à-dire en bon état. En cas de dépassement du seuil, la logique est inhibée par les moyens d'inhibition 7.
- des moyens de mesure de la stabilité du moteur agencés pour mesurer des valeurs telles que par exemple la vitesse du corps BP ($N1_{EFF}$), la vitesse du corps HP (N2) et leur variance. En cas de transitoire, la logique est inhibée par les moyens d'inhibition 7.

De même, si le pilote de l'aéronef souhaite accélérer ou décélérer le moteur en agissant sur la manette des gaz, la correction est inhibée et la position angulaire des aubes n'est pas optimisée. Ce contrôle est réalisé par des moyens de surveillance des transitoires du moteur non représentés.

L'invention concerne également un procédé d'optimisation de la position angulaire courante d'aubes de stator d'un compresseur de turbomoteur comprenant au moins deux corps chacun tournant à une vitesse, pour un turbomoteur fonctionnant en régime stabilisé, procédé dans lequel :

a) on détermine le débit de carburant de référence $WFM_{REF}$ du turbomoteur à une position angulaire de référence $VSV_{REF}$ des aubes ;
b) on détermine le débit de carburant courant $WFM_{COU}$ du turbomoteur à la position angulaire courante $VSV_{COU}$ des aubes ;
c) on calcule un angle correcteur $VSV_{CORR}$ en fonction de la différence entre le débit de carburant de référence $WFM_{REF}$ et le débit de carburant courant $WFM_{COU}$ de manière à diminuer le débit de carburant;
d) on calcule une position de consigne optimisée $VSV_{NEW}$ en ajoutant à la position de consigne $VSV_{CAL}$ l'angle correcteur $VSV_{CORR}$ calculé.
e) on modifie la position angulaire courante $VSV_{COU}$ des aubes afin qu'elle corresponde à la position de consigne optimisée $VSV_{NEW}$.

De préférence, on itère les étapes (a) à (e) en utilisant comme position angulaire de référence $VSV_{REF}$ dans l'étape (a), la position angulaire courante $VSV_{COU}$ de l'étape (b) de l'itération précédente.

Comme représenté sur la figure 5, on optimise la position angulaire des aubes $VSV_{COU}$ après chaque itération ($I_1$, $I_2$, $I_3$) de manière à minimiser la consommation de carburant. Cela permet avantageusement de se rapprocher de la position angulaire optimale $VSV_{OPT}$ optimisant la consommation de carburant à un régime donné, en évitant l'apparition de transitoires susceptibles de perturber le moteur en cas de modification brutale de la position angulaire des aubes.

De préférence encore, on teste la stabilité du régime du moteur et on inhibe la modification de la position angulaire courante $VSV_{COU}$ des aubes en cas d'échec du test de stabilité, comme décrit dans le système de commande selon l'invention.

## Revendications

1.  Système de commande de la position angulaire d'aubes de stator à calage variable d'un compresseur de turbomoteur comprenant au moins deux corps, chacun avec une vitesse de rotation (N1 et N2 respectivement), pour un turbomoteur fonctionnant en régime stabilisé, le système comprenant :

    - des moyens (20) de calcul d'une position angulaire de consigne des aubes ($VSV_{CAL}$) en fonction d'une des vitesses (N1, N2) et
    - un module (1) de correction de la position de consigne ($VSV_{CAL}$) comprenant :

        ∘ des moyens (2) de détermination de la position angulaire des aubes (VSV) ;
        ∘ des moyens (3) de mesure du débit de carburant du turbomoteur (WFM);
        ∘ une mémoire (4) dans laquelle les positions angulaires successives des aubes ($VSV_{COU}$, $VSV_{REF}$) sont associées aux débits de carburant du turbomoteur ($WFM_{COU}$, $WFM_{REF}$) mesurés auxdites positions angulaires ($VSV_{COU}$, $VSV_{REF}$);
        ∘ des moyens (5) de détermination d'un angle correcteur ($VSV_{CORR}$) agencés pour calculer l'angle correcteur ($VSV_{CORR}$) en fonction de la différence entre les débits de carburant ($WFM_{COU}$, $WFM_{REF}$) mesurés entre deux positions angulaires successives des aubes ($VSV_{COU}$, $VSV_{REF}$) ;

    - un additionneur (S) agencé pour calculer une position de consigne optimisée ($VSV_{NEW}$) en ajoutant à la position angulaire de consigne ($VSV_{CALC}$) l'angle correcteur ($VSV_{CORR}$) et
    - un actionneur (6) agencé pour asservir la position angulaire des aubes en fonction de la position de consigne optimisée ($VSV_{NEW}$).

2.  Système selon la revendication 1, dans lequel le module de correction (1) comprend des moyens (8) de contrôle de l'état du turbomoteur et des moyens (7) d'inhibition de la correction de la position angulaire courante des aubes ($VSV_{COU}$), les moyens d'inhibition 7 étant activés si l'état du turbomoteur n'est pas adapté à une correction de la position angulaire des aubes.

3.  Système selon l'une des revendications 1 à 2, dans lequel le module de correction (1) comprend des moyens (9) de limitation de la valeur de l'angle correcteur ($VSV_{CORR}$) agencés pour borner la valeur de l'angle correcteur ($VSV_{CORR}$).

4.  Turbomoteur comprenant un système de commande selon l'une des revendications 1 à 3.

5.  Procédé d'optimisation de la position angulaire courante ($VSV_{COU}$) d'aubes de stator d'un compresseur de turbomoteur comprenant au moins deux corps chacun tournant à une vitesse (N1 ; N2), pour un turbomoteur fonctionnant en régime stabilisé, procédé dans lequel :

    a) on détermine le débit de carburant de référence ($WFM_{REF}$) du turbomoteur à une position angulaire de référence ($VSV_{REF}$) des aubes ;
    b) on détermine le débit de carburant courant ($WFM_{COU}$) du turbomoteur à la position angulaire courante ($VSV_{COU}$) des aubes ;
    c) on calcule un angle correcteur ($VSV_{CORR}$) en fonction de la différence entre le débit de carburant de référence ($WFM_{REF}$) et le débit de carburant courant ($WFM_{COU}$) de manière à diminuer le débit de carburant;
    d) on ajoute à une position de consigne préalablement calculée ($VSV_{CAL}$) ledit angle correcteur ($VSV_{CORR}$) de manière à obtenir une position de consigne optimisée ($VSV_{NEW}$);

e) on modifie la position angulaire courante (VSV$_{COU}$) des aubes afin qu'elle corresponde à la position de consigne optimisée (VSV$_{NEW}$).

6. Procédé selon la revendication 5, dans lequel,

  - on itère les étapes (a) à (e) en utilisant comme position angulaire de référence (VSV$_{REF}$) dans l'étape (a), la position angulaire courante (VSV$_{COU}$) de l'étape (b) de l'itération précédente.

7. Procédé selon l'une des revendications 5 à 6, dans lequel,

  - on calcule l'angle correcteur (VSV$_{CORR}$) par une méthode d'optimisation, de préférence, par une méthode de descente de gradient de la fonction carburant F définissant le débit de carburant du turbomoteur (WFM) par rapport à la position angulaire des aubes (VSV).

8. Procédé selon l'une des revendications 5 à 7, dans lequel on borne la valeur de l'angle correcteur (VSV$_{CORR}$) afin de limiter l'apparition de transitoires dans le turbomoteur.

**Patentansprüche**

1. System zur Steuerung der Winkelposition von verstellbaren Schaufeln eines Stators eines Kompressors eines Turbomotors, der mindestens zwei Körper jeweils mit einer Drehzahl (N1 bzw. N2) für einen Turbomotor umfasst, der im stabilisierten Betrieb betrieben wird, wobei das System umfasst:

  - Mittel (20) zur Berechnung einer Sollwinkelposition der Schaufeln (VSV$_{CAL}$) als Funktion einer der Drehzahlen (N1, N2), und
  - ein Modul (1) zur Korrektur der Sollposition (VSV$_{CAL}$), das umfasst:

    ◦ Mittel (2) zur Bestimmung der Winkelposition der Schaufeln (VSV);
    ◦ Mittel (3) zur Messung des Kraftstoffverbrauchs des Turbomotors (WFM);
    ◦ einen Speicher (4), in dem die aufeinanderfolgenden Winkelpositionen der Schaufeln (VSV$_{COU}$, VSV$_{REF}$) den Kraftstoffverbräuchen des Turbomotors (WFM$_{COU}$, WFM$_{REF}$) zugeordnet sind, die an den Winkelpositionen (VSV$_{COU}$, VSV$_{REF}$) gemessen wurden; und
    ◦ Mittel (5) zur Bestimmung eines Korrekturwinkels (VSV$_{CORR}$), die eingerichtet sind, den Korrekturwinkel (VSV$_{CORR}$) als Funktion der Differenz zwischen den Kraftstoffverbräuchen (WFM$_{COU}$, WFM$_{REF}$) zu berechnen, die zwischen zwei aufeinanderfolgenden Winkelpositionen der Schaufeln (VSV$_{COU}$, VSV$_{REF}$) gemessen wurden;

  - einen Addierer (S), der eingerichtet ist, eine optimierte Sollposition (VSV$_{NEW}$) zu berechnen, indem er zu der Sollwinkelposition (VSV$_{CALC}$) den Korrekturwinkel (VSV$_{CORR}$) hinzufügt, und
  - ein Stellorgan (6), das eingerichtet ist, die Winkelposition der Schaufeln als Funktion der optimierten Sollposition (VSV$_{NEW}$) zu regeln.

2. System nach Anspruch 1, wobei das Korrekturmodul (1) Mittel (8) zur Steuerung des Zustands des Turbomotors und Mittel (7) für die Hemmung der Korrektur der aktuellen Winkelposition der Schaufeln (VSV$_{COU}$) umfasst, wobei die Mittel (7) für die Hemmung aktiviert werden, wenn der Zustand des Turbinenmotors für die Korrektur der Winkelposition der Schaufeln nicht geeignet ist.

3. System nach einem der Ansprüche 1 bis 2, wobei das Korrekturmodul (1) Mittel (9) zur Begrenzung des Werts des Korrekturwinkels (VSV$_{CORR}$) umfasst, die eingerichtet sind, den Wert des Korrekturwinkels (VSV$_{CORR}$) zu beschränken.

4. Turbomotor, der ein System zur Steuerung nach einem der Ansprüche 1 bis 3 umfasst.

5. Verfahren zu Optimierung der aktuellen Winkelposition (VSV$_{COU}$) von Schaufeln eines Stators eines Kompressors eines Turbomotors, der mindestens zwei Körper jeweils mit einer Drehzahl (N1 bzw. N2) für einen Turbomotor umfasst, der im stabilisierten Betrieb betrieben wird, wobei das Verfahren umfasst:

a) Bestimmen des Referenzkraftstoffverbrauchs (WFM$_{REF}$) des Turbomotors bei einer Referenzwinkelposition (VSV$_{REF}$) der Schaufeln;

b) Bestimmen des aktuellen Kraftstoffverbrauchs (WFM$_{COU}$) des Turbomotors bei der aktuellen Winkelposition (VSV$_{COU}$) der Schaufeln;

c) Berechnen eines Korrekturwinkels (VSV$_{CORR}$) als Funktion der Differenz zwischen dem Referenzkraftstoffverbrauch (WFM$_{REF}$) und dem aktuellen Kraftstoffverbrauch (WFM$_{COU}$), um den Kraftstoffverbrauch zu reduzieren;

d) Hinzufügen des Korrekturwinkels (VSV$_{CORR}$) zu einer berechneten Sollposition (VSV$_{CAL}$), um eine optimierte Sollposition (VSV$_{NEW}$) zu erhalten;

e) Ändern der aktuellen Winkelposition (VSV$_{COU}$) der Schaufeln, so dass sie der optimierten Sollposition (VSV$_{NEW}$) entspricht.

6. Verfahren nach Anspruch 5, wobei,

   - unter Verwendung der aktuellen Winkelposition (VSV$_{COU}$) aus Schritt (b) aus der vorherigen Iteration als eine Referenzwinkelposition (VSV$_{REF}$) in Schritt (a) die Schritte (a) bis (e) iteriert werden.

7. Verfahren nach einem der Ansprüche 5 bis 6, wobei

   - der Korrekturwinkel (VSV$_{CORR}$) durch ein Optimierungsverfahren berechnet wird, vorzugsweise durch ein Gradientenabstiegsverfahren der Kraftstofffunktion F, die den Kraftstoffverbrauch des Turbomotors (WFM) mit Bezug auf die Winkelposition der Schaufeln (VSV) definiert.

8. Verfahren nach einem der Ansprüche 5 bis 7, wobei der Wert des Korrekturwinkels (VSV$_{CORR}$) beschränkt wird, um das Auftreten von Transienten in dem Turbomotor zu begrenzen.

## Claims

1. A system for controlling the angular position of variable-pitch stator blades of a turbine engine compressor comprising at least two spools, each with a rotation speed (N1 and N2 respectively), for a turbine engine operating at steady speed, the system comprising:

   - means (20) for computing an angular set position of the blades (VSV$_{CAL}$) as a function of one of the speeds ((N, N2) and
   - a module (1) for correcting the set position comprising:

     ◦ means (2) for determining the angular position of the blades (VSV);
     ◦ means (3) for measuring the fuel flow rate of the turbine engine (WFM);
     ◦ a memory (4) in which the successive angular positions of the blades (VSV$_{COU}$, VSV$_{REF}$) are associated with the fuel flow rates of the turbine engine (WFM$_{COU}$, WFM$_{REF}$) measured at said angular positions (VSV$_{COU}$ VSV$_{REF}$) ;
     ◦ means (5) for determining a correcting angle, said means being arranged to compute the correcting angle (VSV$_{CORR}$) as a function of the difference between the fuel flow rates (WFM$_{COU}$, WFM$_{REF}$) measured between two successive angular positions of the blades (VSV$_{COU}$, VSV$_{REF}$);

   - an adder (S) arranged to compute an optimized set position (VSV$_{NEW}$) by adding the correcting angle (VSV$_{CALC}$) to the set angular position (VSV$_{CORR}$) and
   - an actuator (6) arranged to control the angular position of the blades as a function of the optimized set position (VSV$_{NEW}$).

2. The system as claimed in claim 1, wherein the correction module (1) comprises means (8) for checking the state of the turbine engine and means (7) for inhibiting the correction of the current angular position of the blades (VSV$_{COU}$), the inhibition means (7) being activated if the state of the turbine engine is not suitable for a correction of the angular position of the blades.

3. The system as claimed in claim 1 or 2, in which the correction module (1) comprises means (9) for limiting the value of the correcting angle (VSV$_{CORR}$), said means (9) being arranged to limit the value of the correcting angle (VSV$_{CORR}$).

4. A turbine engine comprising a control system as claimed in one of claims 1 to 3.

5. A method for optimizing the current angular position ($VSV_{COU}$) of stator blades of a turbine engine compressor comprising at least two spools each rotating at a speed ((N, N2), for a turbine engine operating at steady speed, a method in which:

a) the reference fuel flow rate ($WFM_{REF}$) of the turbine engine is determined at a reference angular position ($VSV_{REF}$) of the blades;
b) the current fuel flow rate ($WFM_{COU}$) of the turbine engine is determined at the current angular position ($VSV_{COU}$) of the blades;
c) a correcting angle ($VSV_{CORR}$) is computed as a function of the difference between the reference fuel flow rate ($WFM_{REF}$) and the current fuel flow rate so as to reduce the fuel flow rate ($WFM_{COU}$);
d) said correcting angle ($VSV_{CORR}$) is added to a previously computed set position ($VSV_{CAL}$) so as to obtain an optimized set position ($VSV_{NEW}$);
e) the current angular position ($VSV_{COU}$) of the blades is modified so that it corresponds to the optimized set position ($VSV_{NEW}$).

6. The method as claimed in claim 5, wherein,

- steps (a) to (e) are iterated by using as the reference angular position ($VSV_{REF}$) in step (a) the current angular position ($VSV_{COU}$) of step (b) of the previous iteration.

7. The method as claimed in one of claims 5 to 6, wherein,

- the correcting angle ($VSV_{CORR}$) is computed by an optimization method, preferably by a method of steepest descent of the fuel function F defining the fuel flow rate of the turbine engine (WFM) relative to the angular position of the blades (VSV).

8. The method as claimed in one of claims 5 to 7, wherein the value of the correcting angle ($VSV_{CORR}$) is limited in order to limit the occurrence of transients in the turbine engine.

N2, T$_{25}$ → **20** → VSV$_{CAL}$ → **6** → **M**

## FIGURE 1A

N2, T$_{25}$ → **20** → VSV$_{CAL}$ → S → VSV$_{NEW}$ → **6**

VSV$_{CORR}$

**1**

VSV$_{COU}$/
WFMc$_{OU}$

N1$_{DMD}$ → **31** → **30** → M

N1$_{EFF}$

## FIGURE 1B

FIGURE 2

FIGURE 3

FIGURE 4

FIGURE 5

## RÉFÉRENCES CITÉES DANS LA DESCRIPTION

**Documents brevets cités dans la description**

- GB 2009858 A